# EUROPÄISCHE PATENTANMELDUNG

(11) **EP 4 751 935 A1**
(43) Veröffentlichungstag der Anmeldung: **03.06.2026**
(21) Anmeldenummer: 24216756.7
(22) Anmeldetag: 02.12.2024
(51) Int. Cl.: B60C 11/02, B60B 15/26, B60C 19/12

(54) **REIFENÜBERZUG**

(71) Anmelder: Plan-Süd GmbH, 72574 Bad Urach (DE)
(72) Erfinder: REHM, Uwe, 72574 Bad Urach (DE); KLEINFELD, Andreas, 73457 Essingen (DE)
(74) Vertreter: Jeck, Jonathan

(57) **Zusammenfassung**

Die vorliegende Offenbarung betrifft einen Reifenüberzug zum Anbringen an einem Reifen. Der Reifenüberzug umfasst eine Außenfläche und eine Innenfläche, wobei die Innenfläche eine Reihe von Vertiefungen aufweist, die so angeordnet sind, dass sie mit dem Profil des Reifens ineinandergreifen. Der Reifenüberzug weist weiterhin zwei seitliche Öffnungen auf, die von einem äußeren Rand umgeben sind, sowie ein Verbindungsteil zum Befestigen und Entfernen des Reifenüberzugs. Die Konstruktion ermöglicht eine sichere Passung auf dem Reifen, wobei die Vertiefungen der Innenfläche mit dem Reifenprofil verzahnt sind, um ein Verrutschen während der Verwendung zu verhindern.

## Beschreibung

Die vorliegende Offenbarung bezieht sich auf einen Reifenüberzug, und insbesondere auf ein System, einen Reifenüberzug und ein Verfahren zur Anpassung der Griffigkeit eines Reifens durch einen abnehmbaren Reifenüberzug mit einem verzahnenden Profilmuster gemäß den Ansprüchen 1, 7 und 13.

Ein System zur Anpassung der Griffigkeit eines Reifens, umfassend einen Reifen mit einem Reifenprofil und einen Reifenüberzug. Der Reifenüberzug weist eine Innenfläche mit Vertiefungen auf, die mit dem Reifenprofil korrespondieren, eine Außenfläche und ein Verbindungsteil zum Anbringen und Entfernen des Reifenüberzugs. Die Vertiefungen der Innenfläche verzahnen mit dem Reifenprofil, um ein Verrutschen zu verhindern.

Ein Reifenüberzug mit einer Innenfläche mit Vertiefungen, die mit Erhöhungen eines Reifenprofils korrespondieren, einer Außenfläche und einem Verbindungsteil. Die Vertiefungen sind ausgebildet, mit dem Reifenprofil zu verzahnen und ein Verrutschen zu verhindern.

Ein Verfahren zum Anpassen der Griffigkeit eines Reifens, umfassend: Bereitstellen eines Reifens mit einem Reifenprofil; Bereitstellen eines Reifenüberzugs mit einer Innenfläche mit Vertiefungen; Anbringen des Reifenüberzugs auf dem Reifen, wobei die Vertiefungen mit dem Reifenprofil verzahnt werden.

Reifen sind ein wesentlicher Bestandteil von Fahrzeugen und spielen eine entscheidende Rolle für Sicherheit, Komfort und Leistung. Sie bilden die einzige Verbindung zwischen dem Fahrzeug und der Straße und müssen daher verschiedene Anforderungen erfüllen. Dazu gehören Traktion, Stabilität, Haltbarkeit und Kraftstoffeffizienz. Die Leistung eines Reifens hängt stark von seinem Profil ab, das für unterschiedliche Fahrbedingungen und Witterungsverhältnisse optimiert sein muss.

Ein häufiges Problem bei herkömmlichen Reifen ist ihre begrenzte Anpassungsfähigkeit an wechselnde Fahrbedingungen. Reifen werden in der Regel für bestimmte Einsatzzwecke wie Sommerfahrten, Wintereinsatz oder Geländefahrten entwickelt. Dies führt dazu, dass Fahrzeughalter oft mehrere Reifensätze benötigen und diese je nach Jahreszeit oder Einsatzzweck wechseln müssen. Dieser Prozess ist zeitaufwändig, kostspielig und erfordert zusätzlichen Lagerraum für die nicht verwendeten Reifen.

Ein weiteres Problem besteht darin, dass herkömmliche Reifen bei unerwarteten Wetterwechseln oder plötzlichen Änderungen der Straßenverhältnisse nicht schnell angepasst werden können. Dies kann zu verminderter Sicherheit und Leistung führen, insbesondere in Regionen mit stark schwankenden Wetterbedingungen oder auf Reisen durch verschiedene Klimazonen.

Darüber hinaus führt der Verschleiß des Reifenprofils im Laufe der Zeit zu einer Verringerung der Leistungsfähigkeit und Sicherheit des Reifens. In vielen Fällen müssen Reifen ausgetauscht werden, lange bevor ihre strukturelle Integrität beeinträchtigt ist, was zu erhöhtem Ressourcenverbrauch und Abfallaufkommen führt.

Es wurde erkannt, dass ein System zur Anpassung der Reifenoberfläche benötigt wird, welches diese Probleme überwindet.

In einem ersten Aspekt wird ein System zur Anpassung der Griffigkeit eines Reifens bereitgestellt. Das System kann folgende Elemente aufweisen: einen Reifen mit einem Reifenprofil; und einen Reifenüberzug, wobei der Reifenüberzug eine Innenfläche mit Vertiefungen, die zumindest teilweise dem Reifenprofil, insbesondere dessen Erhöhungen entsprechen; eine Außenfläche und ein Verbindungsteil zum Anbringen und Entfernen des Reifenüberzugs an dem bzw. von dem Reifen aufweist, wobei Vertiefungen der Innenfläche mit dem Reifenprofil im betriebsgemä-βen Zustand verzahnt sind, ein Verrutschen zwischen dem Reifenüberzug und dem Reifen während der Verwendung zu verhindern.

Dieses neuartige System ermöglicht eine einfache und effektive Anpassung der Reifengriffigkeit ohne den Reifen selbst wechseln zu müssen. Durch die Verzahnung zwischen Reifenüberzug und Reifenprofil wird eine sichere Verbindung gewährleistet, die ein Verrutschen verhindert. Verzahnen nach der vorliegenden Erfindung kann jegliche Art von Eingriff des Reifenprofils in das Innenprofil des Reifenüberzugs umfassen. Das Innenprofil kann mit Erhöhungen oder Vertiefungen ausgebildet sein, die ausgebildet sind mit entsprechenden Vertiefungen oder Erhöhungen des Reifenprofils, insbesondere haltend, wechselzuwirken bzw. einzugreifen.

Die Vertiefungen der Innenfläche des Reifenüberzugs können zumindest bereichsweise ein Negativ des Reifenprofils, also dessen Erhöhungen und/oder Vertiefungen bilden.

Diese Ausgestaltung ermöglicht eine besonders präzise Passform zwischen Reifenüberzug und Reifen, was die Stabilität und Sicherheit während der Fahrt weiter erhöht.

Die Außenfläche des Reifenüberzugs kann ein glattes Profil aufweisen. Ein glattes Außenprofil des Reifenüberzugs ermöglicht eine Verringerung des Rollwiderstands, was zu einem geringeren Kraftstoffverbrauch und einer erhöhten Reichweite führen kann.

Das Verbindungsteil kann ein Klicksystem umfassen. Ein Klicksystem als Verbindungsteil ermöglicht ein schnelles und einfaches Anbringen und Entfernen des Reifenüberzugs, was den Wechsel zwischen verschiedenen Griffigkeiten je nach Fahrbedingungen erleichtert.

Der Reifenüberzug kann aus einem elastischen Material hergestellt sein, eine anliegende Passform mit dem Reifen zu gewährleisten. Die Verwendung eines elastischen Materials für den Reifenüberzug gewährleistet eine optimale Anpassung an die Reifenform und verbessert die Haftung zwischen Überzug und Reifen.

Die seitlichen Öffnungen können von einem äußeren Rand umgeben sein, der die seitliche Sitzfestigkeit des Reifenüberzugs verstärkt. der Rand kann einen Seitlichen Abschluss des Reifenüberzugs bilden. Ein verstärkter äußerer Rand um die seitlichen Öffnungen erhöht die Stabilität des Reifenüberzugs und verhindert ein unbeabsichtigtes Ablösen während der Fahrt.

In einem zweiten Aspekt wird ein Reifenüberzug bereitgestellt. Der Reifenüberzug weist bevorzugt eine Innenfläche mit Vertiefungen, die ausgebildet sind, zumindest teilweise mit Erhöhungen eines Reifenprofils eines Reifens zu korrespondieren; eine Außenfläche und ein Verbindungsteil zum Anbringen und Entfernen des Reifenüberzugs an dem Reifen auf, wobei Vertiefungen der Innenfläche ausgebildet sind, mit dem Reifenprofil, insbesondere mit dessen Erhöhungen zu verzahnen und ein Verrutschen zwischen dem Reifenüberzug und dem Reifen während der Verwendung zu verhindern.

Dieser neuartige Reifenüberzug ermöglicht eine flexible Anpassung der Reifeneigenschaften, ohne den Reifen selbst austauschen zu müssen. Die spezielle Konstruktion der Innenfläche gewährleistet eine sichere Verbindung mit dem Reifen.

In einem dritten Aspekt wird ein Verfahren zum Anpassen der Griffigkeit eines Reifens bereitgestellt. Das Verfahren weist das Bereitstellen eines Reifenüberzugs mit einer Innenfläche mit Vertiefungen, die zumindest teilweise dem Reifenprofil eines Reifens entsprechen und Anbringen des Reifenüberzugs auf dem Reifen auf, wobei Vertiefungen der Innenfläche mit dem Reifenprofil verzahnt werden, wodurch einem Verrutschen zwischen dem Reifenüberzug und dem Reifen während der Verwendung vorgebeugt ist.

Dieses Verfahren ermöglicht eine einfache und effiziente Anpassung der Reifengriffigkeit an verschiedene Fahrbedingungen, ohne den kompletten Reifen wechseln zu müssen. Die Verzahnung zwischen Reifenüberzug und Reifenprofil gewährleistet eine sichere Verbindung während der Fahrt. Grundsätzlich ist es möglich ein Innenprofil bereitzustellen, das mit einem beliebigen Reifenprofil in der erfindungsgemäßen Weise Wechselwirkt um eine zweckmäßige Haftreibung und/oder Verzahnung zu bewirken.

Das Verfahren kann ferner das Schließen des Verbindungsteils des Reifenüberzugs umfassen, wodurch der Reifenüberzug um den Reifen festgelegt wird.

Durch das Schließen des Verbindungsteils wird eine zusätzliche Sicherung des Reifenüberzugs erreicht, was die Stabilität und Zuverlässigkeit des Systems weiter erhöht.

Alle Merkmale und Aspekte der Erfindung sind unabhängig und in beliebiger Kombination miteinander hiermit explizit offenbart. Dies betrifft sowohl die Figurenbeschreibung als auch die allgemeine Beschreibung.

Ausführungsformen der Erfindung werden beispielhaft anhand der folgenden Zeichnungen beschrieben, in denen:
FIG. 1 eine perspektivische Ansicht eines Reifenüberzugs.
FIG. 2 einen Querschnitt einer Reifenauflage in Kombination mit einem Reifen gemäß einem Aspekt der Erfindung darstellt.

In den Abbildungen werden durchgängig gemeinsame Referenznummern verwendet, um ähnliche Merkmale zu kennzeichnen.

Die vorliegende Erfindung bezieht sich auf ein System zur Anpassung der Griffigkeit eines Reifens. Das System kann einen Reifen mit einem Reifenprofil und einen abnehmbaren Reifenüberzug umfassen. Der Reifenüberzug kann eine Innenfläche mit Vertiefungen aufweisen, die mit dem Reifenprofil korrespondieren können. Die Vertiefungen der Innenfläche des Reifenüberzugs können ausgebildet sein, mit dem Reifenprofil zu verzahnen und/oder Reibschluss zu bewirken, um ein Verrutschen zwischen Reifenüberzug und Reifen während der Verwendung zu verhindern. Der Reifenüberzug kann ferner eine Außenfläche und ein Verbindungsteil zum Anbringen und Entfernen des Reifenüberzugs aufweisen. Das System kann eine flexible Anpassung der Reifeneigenschaften an verschiedene Fahrbedingungen ermöglichen, ohne den gesamten Reifen wechseln zu müssen. In einigen Ausführungsformen kann der Reifenüberzug aus einem elastischen Material hergestellt sein, um eine anliegende Passform mit dem Reifen zu gewährleisten. Das Verbindungsteil kann in manchen Fällen als Klicksystem ausgeführt sein, um ein einfaches Anbringen und Entfernen zu ermöglichen.

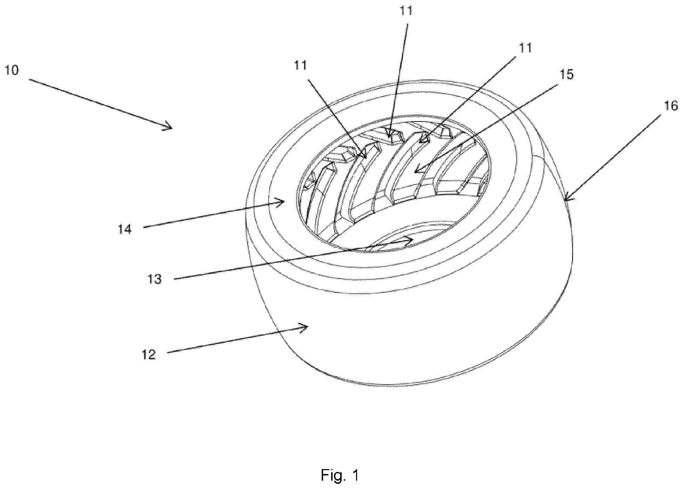

Bezugnehmend auf FIG. 1 ist ein Reifenüberzug 10 dargestellt. Der Reifenüberzug 10 kann eine Außenfläche 12 aufweisen, die ein glattes oder anderes Profil haben kann. Die Außenfläche 12 kann die äußere Kontur des Reifenüberzugs 10 bilden und kann eine abgerundete Form aufweisen, die sich der Krümmung eines Reifens 17 anpassen kann.

Der Reifenüberzug 10 kann ein Verbindungsteil 16 umfassen, das zum Anbringen und Entfernen des Reifenüberzugs 10 an bzw. von dem Reifen 17 dienen kann. Das Verbindungsteil 16 kann ein Klicksystem beinhalten, das eine sichere Befestigung des Reifenüberzugs 10 am Reifen 17 ermöglichen kann, ohne dabei Geräusche zu verursachen oder den Fahrer während der Rotation des Reifens 17 zu destabilisieren.

Das Klicksystem des Verbindungsteils 16 kann so gestaltet sein, dass es eine formschlüssige Verbindung zwischen den Enden des Reifenüberzugs 10 herstellt. Diese Verbindung kann durch ineinandergreifende Geometrien an den Enden des Reifenüberzugs 10 realisiert werden, wobei ein Ende in das andere Ende einrasten oder gesteckt werden kann.

Der Reifenüberzug 10 kann aus einem elastischen Material hergestellt sein, um eine anliegende Passform mit dem Reifen 17 zu gewährleisten. Dies kann dazu beitragen, dass der Reifenüberzug 10 sicher auf dem Reifen 17 sitzt und während der Verwendung nicht verrutscht.

Der Reifenüberzug [10] kann im betriebsgemäßen Zustand seitliche Öffnungen [13] aufweisen, welche durch den Ringförmigen Aufbau des Reifenüberzugs im Betriebsgemäßen Zustand gebildet sein können. Diese Öffnungen [13] können von einem äußeren Rand [14] der Reifenüberzugs umgeben sein, der die seitliche Sitzfestigkeit des Reifenüberzugs [10] verstärken kann. Der äußere Rand [14] kann eine leicht erhöhte Kante um die Öffnung [13] bilden, um den Reifenüberzug [10] zusätzlich am Reifen [17] zu sichern.

Ein Verbindungsteil [16] kann am Reifenüberzug [10] vorgesehen sein, um den Reifenüberzug [10] am Reifen [17] zu befestigen. Das Verbindungsteil [16] kann beispielsweise ein Klicksystem umfassen, das es ermöglicht, den Reifenüberzug [10] einfach anzubringen und zu entfernen. Zum Anbringen des Reifenüberzugs [10] kann das Verbindungsteil [16] geschlossen werden, wodurch der Reifenüberzug [10] sicher um den Reifen [17] festgelegt werden kann. der Verbindungsteil kann insbesondere aus dem Material des Reifenüberzugs, insbesondere dessen Laufflächen Material aufweisen und/oder in die Lauffläche bündig integriert sein.

Die Außenfläche [12] des Reifenüberzugs [10] kann verschiedene Texturen aufweisen. In einigen Ausführungsformen kann die Außenfläche [12] ein starkes Reifenprofil aufweisen, ähnlich dem eines herkömmlichen Reifens. In anderen Ausführungsformen kann die Außenfläche [12] eine glatte Oberfläche haben, die beispielsweise für Rennzwecke geeignet sein kann. Die Textur der Außenfläche [12] kann je nach gewünschtem Verwendungszweck variieren und an unterschiedliche Fahrbedingungen angepasst werden.

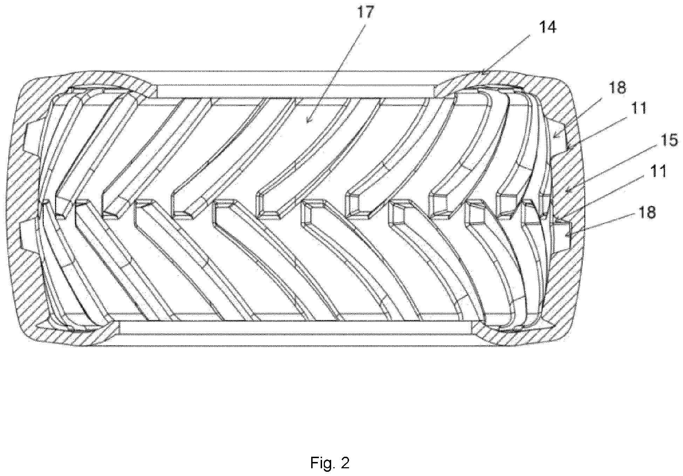

Unter Bezugnahme auf FIG. 2 kann ein Querschnitt eines Systems zur Anpassung der Griffigkeit eines Reifens dargestellt sein. Das System kann einen Reifen [17] mit einem Reifenprofil [18] und einen Reifenüberzug [10] umfassen. Der Reifenüberzug [10] kann eine Innenfläche [15] aufweisen, die mit Vertiefungen [11] versehen sein kann. Diese Vertiefungen [11] können zumindest teilweise dem Reifenprofil [18], insbesondere dessen Erhöhungen, entsprechen. Im betriebsgemäßen Zustand können die Vertiefungen [11] der Innenfläche [15] mit dem Reifenprofil [18] verzahnt sein und/oder mit diesem einen Reibschluss bilden. Diese Verzahnung kann dazu dienen, ein Verrutschen zwischen dem Reifenüberzug [10] und dem Reifen [17] während der Verwendung zu verhindern. Die Vertiefungen [11] der Innenfläche [15] des Reifenüberzugs [10] können zumindest bereichsweise ein Negativ des Reifenprofils [18] bilden. Der Reifenüberzug [10] kann so gestaltet sein, dass er den Reifen [17], zumindest hinsichtlich dessen Lauffläche und/oder Reifenseiten vollständig umschließt und sich dessen Form anpasst. Die Vertiefungen [11] können in einem V-förmigen Muster angeordnet sein, das zur Mitte des Reifenüberzugs [10] zeigt. Diese Anordnung kann eine besonders effektive Verzahnung mit dem Reifenprofil [18] ermöglichen.

Bezugnehmend auf FIG. 2 kann der Reifenüberzug 10 eine Innenfläche 15 mit Vertiefungen 11 aufweisen, die zumindest teilweise dem Reifenprofil 18 des Reifens 17 entsprechen. Die Vertiefungen 11 können in einem Chevron-artigen Muster angeordnet sein, wobei die V-förmigen Kanäle zur Mitte des Reifenüberzugs 10 zeigen. Diese Anordnung kann dazu beitragen, ein Verrutschen zwischen dem Reifenüberzug 10 und dem Reifen 17 während der Verwendung zu verhindern.

Die Innenfläche 15 des Reifenüberzugs 10 kann selektive Erhöhungen aufweisen, die sich aus einer mathematischen Überlagerung mehrerer ähnlicher Reifenprofile ergeben. Dabei können gemeinsame Vertiefungen der Reifenprofile in eine Erhöhung am Innenprofil des Reifenüberzugs 10 übersetzt werden. Dies kann eine Kompatibilität des Reifenüberzugs 10 mit einer Vielzahl von ähnlichen Reifenprofilen gewährleisten.

Der Reifenüberzug 10 kann so konzipiert sein, dass er sich um den gesamten Umfang des Reifens 17 legt und eine enganliegende Passform bietet. Die Vertiefungen 11 auf der Innenfläche 15 des Reifenüberzugs 10 können mit dem Reifenprofil 18 verzahnt werden, um eine sichere Verbindung zwischen den beiden Elementen herzustellen.

Das Chevron-artige Muster der Vertiefungen 11 kann dazu beitragen, die Leistung des Reifens 17 in verschiedenen Fahrbedingungen zu verbessern. Es kann beispielsweise die Traktion bei Nässe erhöhen oder die Stabilität in Kurven verbessern.

Der Reifenüberzug 10 kann aus einem elastischen Material hergestellt sein, um sich der Form des Reifens 17 anzupassen und eine optimale Passform zu gewährleisten. Dies kann dazu beitragen, dass der Reifenüberzug 10 auch bei hohen Geschwindigkeiten oder starken Belastungen sicher auf dem Reifen 17 sitzt.

Der Reifenüberzug [10] kann aus einem elastischen Material hergestellt sein, um eine enganliegende Passform mit dem Reifen [17] zu gewährleisten. In einigen Ausführungsformen kann der Reifenüberzug [10] im Wesentlichen aus Gummi gefertigt sein, was die Herstellung verschiedener Geometrien, wie beispielsweise Hinterschnitte, ermöglichen und eine einfache Entformung erlauben kann. Das elastische Material kann es dem Reifenüberzug [10] ermöglichen, sich an unterschiedliche Reifengrößen und -profile anzupassen.

Das Verbindungsteil [16] des Reifenüberzugs [10] kann einen Formschluss verwenden, bei dem ein Ende in das andere Ende eingeklipst oder eingesteckt werden kann. Diese Art der Verbindung kann eine sichere Befestigung des Reifenüberzugs [10] am Reifen [17] ermöglichen, ohne dass zusätzliche Werkzeuge erforderlich sind. Der Formschluss kann so gestaltet sein, dass er einfach zu schlie-βen und zu öffnen ist, um ein schnelles Anbringen und Entfernen des Reifenüberzugs [10] zu ermöglichen.

Die Verwendung von Gummi als Material für den Reifenüberzug [10] kann es ermöglichen, komplexe Strukturen an der Innenfläche [15] zu formen, die präzise mit dem Reifenprofil [18] korrespondieren können. Dies kann zu einer verbesserten Verzahnung zwischen dem Reifenüberzug [10] und dem Reifen [17] führen und somit die Stabilität während der Verwendung erhöhen.

In einigen Ausführungsformen kann das elastische Material des Reifenüberzugs [10] unterschiedliche Härtegrade aufweisen, um verschiedene Fahrbedingungen oder Reifentypen zu berücksichtigen. Der Reifenüberzug [10] kann auch aus mehreren Materialschichten bestehen, wobei jede Schicht spezifische Eigenschaften aufweisen kann, um die Gesamtleistung zu optimieren.

Die Reihenfolge der Schritte der hier beschriebenen Verfahren ist beispielhaft, aber die Schritte können in jeder geeigneten Reihenfolge oder gegebenenfalls gleichzeitig durchgeführt werden. Außerdem können Schritte hinzugefügt oder ersetzt werden, oder einzelne Schritte können aus einem der Verfahren entfernt werden, ohne vom Umfang des hier beschriebenen Gegenstands abzuweichen.

Aspekte der oben beschriebenen Beispiele können mit Aspekten der anderen beschriebenen Beispiele kombiniert werden, um weitere Beispiele zu bilden, ohne die angestrebte Wirkung zu verlieren.

Es versteht sich, dass die obige Beschreibung einer bevorzugten Ausführungsform nur beispielhaft gegeben ist und dass verschiedene Modifikationen von Fachleuten vorgenommen werden können. Was hier beschrieben wurde, umfasst Beispiele einer oder mehrerer Aspekte. Es ist natürlich nicht möglich, jede denkbare Modifikation und Änderung der oben genannten Vorrichtungen oder Verfahren zum Zweck der Beschreibung der vorgenannten Aspekte zu beschreiben, aber ein Fachmann kann erkennen, dass viele weitere Modifikationen und Permutationen verschiedener Aspekte möglich sind. Dementsprechend sollen die beschriebenen Aspekte alle solche Änderungen, Modifikationen und Variationen umfassen, die in den Rahmen der beigefügten Ansprüche fallen.

## Patentansprüche

1. Ein System zur Anpassung der Griffigkeit eines Reifens, umfassend:
einen Reifen [17] mit einem Reifenprofil [18]; und
einen Reifenüberzug [10], der Reifenüberzug [10] umfassend:
eine Innenfläche [15] mit Vertiefungen [11], die zumindest teilweise dem Reifenprofil [18], insbesondere dessen Erhöhungen entsprechen;
eine Außenfläche [12] und
ein Verbindungsteil [16] zum Anbringen und Entfernen des Reifenüberzugs [10] an dem bzw. von dem Reifen [17],
wobei Vertiefungen [11] der Innenfläche [15] mit dem Reifenprofil [18] im betriebsgemäßen Zustand verzahnt sind, ein Verrutschen zwischen dem Reifenüberzug [10] und dem Reifen [17] während der Verwendung zu verhindern.

2. Das System nach Anspruch 1, wobei die Vertiefungen [11] der Innenfläche [15] des Reifenüberzugs [10] zumindest bereichsweise ein Negativ des Reifenprofils [18] bilden.

3. Das System nach Anspruch 1 oder 2, wobei die Außenfläche [12] des Reifenüberzugs [10] ein glattes Profil aufweist.

4. Das System nach einem der Ansprüche 1 bis 3, wobei das Verbindungsteil [16] ein Klicksystem umfasst.

5. Das System nach einem der Ansprüche 1 bis 4, wobei der Reifenüberzug [10] aus einem elastischen Material hergestellt ist, eine anliegende Passform mit dem Reifen [17] zu gewährleisten.

6. Das System nach einem der Ansprüche 1 bis 5, wobei der Reifenüberzug im betriebsgemäßen Zustand seitliche Öffnungen [13] aufweist, die von einem äußeren Rand [14] umgeben sind, der die seitliche Sitzfestigkeit des Reifenüberzugs [10] verstärkt.

7. Ein Reifenüberzug [10], umfassend:
eine Innenfläche [15] mit Vertiefungen [11], die ausgebildet sind, zumindest teilweise mit Erhöhungen eines Reifenprofils [18] eines Reifens [17] zu korrespondieren;
eine Außenfläche [12] und
ein Verbindungsteil [16] zum Anbringen und Entfernen des Reifenüberzugs [10] an dem Reifen [17],
wobei Vertiefungen [11] der Innenfläche [15] ausgebildet sind, mit dem Reifenprofil [18], insbesondere mit dessen Erhöhungen zu verzahnen und ein Verrutschen zwischen dem Reifenüberzug [10] und dem Reifen [17] während der Verwendung zu verhindern.

8. Der Reifenüberzug [10] nach Anspruch 7, wobei die Vertiefungen [11] der Innenfläche [15] zumindest bereichsweise ein Negativ des Reifenprofils [18] bilden.

9. Der Reifenüberzug [10] nach Anspruch 7 oder 8, wobei die Außenfläche [12] ein glattes Profil aufweist.

10. Der Reifenüberzug [10] nach einem der Ansprüche 7 bis 9, wobei das Verbindungsteil [16] ein Klicksystem umfasst.

11. Der Reifenüberzug [10] nach einem der Ansprüche 7 bis 10, wobei der Reifenüberzug [10] aus einem elastischen Material hergestellt ist, eine anliegende Passform mit dem Reifen [17] zu gewährleisten.

12. Der Reifenüberzug [10] nach einem der Ansprüche 7 bis 11, wobei der Reifenüberzug im betriebsgemäßen Zustand seitlichen Öffnungen [13] aufweist, die von einem äußeren Rand [14] umgeben sind, der die seitliche Sitzfestigkeit des Reifenüberzugs [10] verstärkt.

13. Ein Verfahren zum Anpassen der Griffigkeit eines Reifens, umfassend:
Bereitstellen eines Reifens [17] mit einem Reifenprofil [18];
Bereitstellen eines Reifenüberzugs [10] mit einer Innenfläche [15] mit Vertiefungen [11], die zumindest teilweise dem Reifenprofil [18] entsprechen;
Anbringen des Reifenüberzugs [10] auf dem Reifen [17], wobei Vertiefungen [11] der Innenfläche [15] mit dem Reifenprofil [18] verzahnt werden, wodurch einem Verrutschen zwischen dem Reifenüberzug [10] und dem Reifen [17] während der Verwendung vorgebeugt ist.

14. Das Verfahren nach Anspruch 13, ferner umfassend:
schließen des Verbindungsteils [16] des Reifenüberzugs [10] wodurch der Reifenüberzug [10] um den Reifen [17] festgelegt wird.
